# EUROPÄISCHE PATENTSCHRIFT

(11) **EP 1 812 199 B1**
(45) Veröffentlichungstag und Bekanntmachung des Hinweises auf die Patenterteilung: **08.08.2012**
(21) Anmeldenummer: 05782107.6
(22) Anmeldetag: 26.08.2005
(51) Int. Cl.: B23K 26/34, B23P 6/00

(54) **VERFAHREN ZUR REPARATUR VON TURBOMASCHINENSCHAUFELN**
METHOD FOR REPAIRING TURBOMACHINE BLADES
PROCEDE DE REPARATION D'AUBES DE TURBOMACHINES

(30) Priorität: 04.09.2004 DE 102004042878
(43) Veröffentlichungstag der Anmeldung: 01.08.2007
(73) Patentinhaber: MTU Aero Engines GmbH, 80995 München (DE)
(72) Erfinder: RICHTER, Karl-Hermann, 85229 Markt Indersdorf (DE); WEISS, Michael, 85221 Dachau (DE)
(86) Internationale Anmeldenummer: PCT/DE2005/001501
(87) Internationale Veröffentlichungsnummer: WO 2006/026955

(56) Entgegenhaltungen:
- EP-A- 1 249 300
- US-A- 4 841 117
- US-A- 5 701 669
- US-A1- 2004 086 635
- US-B1- 6 172 327
- PATENT ABSTRACTS OF JAPAN Bd. 2002, Nr. 02, 2. April 2002 (2002-04-02) & JP 2001 269784 A (TOSHIBA CORP), 2. Oktober 2001 (2001-10-02)

## Beschreibung

Die Erfindung betrifft ein Verfahren zur Reparatur von Turbomaschinenschaufeln, insbesondere von Gasturbinenschaufeln an integral beschaufelten Gasturbinenrotoren.

Gasturbinenschaufeln unterliegen während des Betriebs einem Verschleiß insbesondere durch Oxidation, Korrosion und Erosion sowie durch Vogelschlag oder auch Hagelschlag. Durch den oben genannten Verschleiß der Gasturbinenschaufeln kann es erforderlich werden, dieselben nach Beschädigung dadurch zu reparieren, dass beschädigte Abschnitte bzw. Bereiche der Gasturbinenschaufeln entfernt sowie nach dem Entfernen der beschädigten Abschnitte bzw. Bereiche dieselben erneuert werden. Dies gilt insbesondere bei der Reparatur von Gasturbinenschaufeln integral beschaufelter Gasturbinenrotoren, sogenannten blisks (bladed disks) oder blings (bladed rings).

Die US 6,172,327 B1 offenbart ein Verfahren zur Reparatur von Gasturbinenschaufeln an integral beschaufelten Gasturbinenrotoren. Nach dem dort beschriebenen Verfahren wird ein beschädigter Abschnitt einer Gasturbinenschaufel von dem integral beschaufelten Gasturbinenrotor entfernt und anschließend wird durch Laserpulverauftragsschweißen der entfernte Abschnitt bzw. Bereich erneuert. Bei dem in der US 6,172,327 B1 beschriebenen Verfahren ist insbesondere das Aufbringen der ersten Pulverlage durch Laserpulverauftragsschweißen auf den nach dem Abtrennen des beschädigten Bereichs hinterlassenen Schaufelstumpf problematisch. Bislang ist aus dem Stand der Technik kein Verfahren bekannt, welches der Anbindung der ersten, besonders kritischen Pulverlage Rechnung trägt.

Hiervon ausgehend liegt der vorliegenden Erfindung das Problem zu Grunde, ein neuartiges Verfahren zur Reparatur von Turbomaschinenschaufeln, insbesondere von Gasturbinenbauteilen integral beschaufelter Gasturbinenrotoren, zu schaffen.

Dieses Problem wird durch ein Verfahren gemäß Patentanspruch 1 gelöst. Erfindungsgemäß umfasst das Verfahren zumindest die folgenden Schritte:
a) Bereitstellen einer zu reparierenden Turbomaschinenschaufel oder eines zu reparierenden, integral beschaufelten Rotors mit einem beschädigten Schaufelabschnitt; b) Entfernen des beschädigten Schaufelabschnitts von der Turbomaschinenschaufel oder dem integral beschaufelten Rotor unter Bildung eines Schaufelstumpfes; c) Einspannen des Schaufelstumpfes zumindest im Bereich einer Strömungseintrittskante und einer Strömungsaustrittskante desselben in einer Kühleinrichtung; d) Auftragen jeweils einer punktförmigen Schweißperle im Bereich der Strömungseintrittskante und der Strömungsaustrittskante des Schaufelstumpfes durch Laserpulverauftragschweißen, wobei die Schweißperlen zumindest über die Strömungseintrittskante und die Strömungsaustrittskante vorstehen, e) Auftragen von Material durch Laserpulverauftragschweißen zwischen den Schweißperlen im Bereich des oder jedes entfernten Schaufelabschnitts zur Erneuerung des entsprechenden Schaufelabschnitts.

Im Sinne der hier vorliegenden Erfindung wird vorgeschlagen, den nach dem Abtrennen des beschädigten Schaufelabschnitts verbleibenden Schaufelstumpf zumindest im Bereich der Strömungseintrittskante sowie der Strömungsaustrittskante in einer Kühleinrichtung einzuspannen und anschließend im Bereich der Strömungseintrittskante sowie der Strömungsaustrittskante sich über dieselben erstreckende bzw. vorstehende Schweißperlen durch Laserpulverauftragsschweißen aufzutragen. Hierdurch wird eine perfekte Anbindung der ersten kritischen Pulverlage beim Erneuern des abgetrennten Schaufelabschnitts gewährleistet. Durch die Kühlung im Bereich der Strömungseintrittskante sowie Strömungsaustrittskante wird eine thermische Beschädigung der Schaufel an diesen Kanten, die besonders dünn und daher besonders anfällig sind, vermieden. Durch die Anbringung der Schweißpunkte wird der Abstand bzw. Freiraum zwischen der Kühleinrichtung und der Strömungseintrittskante sowie Strömungsaustrittskante des Schaufelstumpfes sozusagen überbrückt, sodass beim nachfolgenden Erneuern des abgetrennten Bereichs das Laserpulverauftragsschweißen mit einem Aufmaß im Bereich der Strömungseintrittskante sowie Strömungsaustrittskante ausgeführt werden kann. Hierdurch wird es möglich, nach dem Laserpulverauftragsschweißen durch einen Abtragprozess endkonturgenaue Strömungseintrittskanten sowie Strömungsaustrittskanten bereitzustellen. Weiterhin ermöglicht das Verfahren einen nahezu eigenspannungsfreien Schichtaufbau, sodass in der Regel auf aufwendige Wärmenachbehandlungsschritte, insbesondere auf ein Spannungsarmglühen, verzichtet werden kann.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine beim erfindungsgemäßen Verfahren eingesetzte Kühleinrichtung;
- Fig. 2: eine Prinzipskizze im Bereich des Details II der Fig. 1 zur Verdeutlichung des erfindungsgemäßen Verfahrens; und
- Fig. 3: eine weitere Prinzipskizze im Bereich des Details II der Fig. 1 zur Verdeutlichung des erfindungsgemäßen Verfahrens.

Das erfindungsgemäße Verfahren dient insbesondere der Reparatur von beschädigten Gasturbinenschaufeln an integral beschaufelten Gasturbinenrotoren, sogenannten blisks oder blings. Es kann aber auch zu Reparatur anderer Schaufeln von Strömungsmaschinen verwendet werden. Die Beschädigung der Schaufeln kann entweder im Betrieb, zum Beispiel durch einen Fremdkörpereinschlag, oder bei der Neuteilfertigung auftreten. Nachfolgend wird das Verfahren an Hand der Reparatur einer Schaufel eines integral beschaufelten Gasturbinenrotors beschrieben.

In einem ersten Schritt des erfindungsgemäßen Verfahrens wird ein integral beschaufelter Gasturbinenrotor mit einer zu reparierenden Gasturbinenschaufel bereitgestellt. Sodann wird ein beschädigter Schaufelabschnitt von der zu reparierenden Gasturbinenschaufel des integral beschaufelten Gasturbinenrotors abgetrennt bzw. entfernt, wobei nach dem Abtrennen des beschädigten Abschnitts ein sogenannter Schaufelstumpf verbleibt.

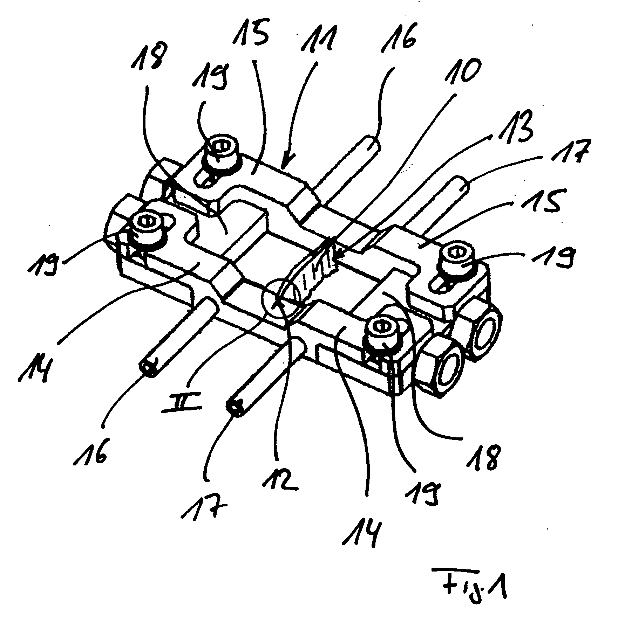

Im Sinne der hier vorliegenden Erfindung wird ein solcher Schaufelstumpf 10 (siehe Fig. 1) in einer Kühleinrichtung 11 positioniert, wobei der Schaufelstumpf 10 einerseits im Bereich einer Strömungseintrittskante 12 sowie andererseits im Bereich einer Strömungsaustrittskante 13 in der Kühleinrichtung 11 eingespannt wird. Wie Fig. 1 entnommen werden kann, wird die Kühleinrichtung 11 von zwei Kühlbacken 14 und 15 gebildet, wobei jede der beiden Kühlbacken 14 und 15 eine Zuleitung 16 sowie eine Ableitung 17 für ein Kühlmedium aufweist. Die Kühlbacken 14 und 15 werden demnach zur Kühlung von einem Kühlmedium durchströmt.

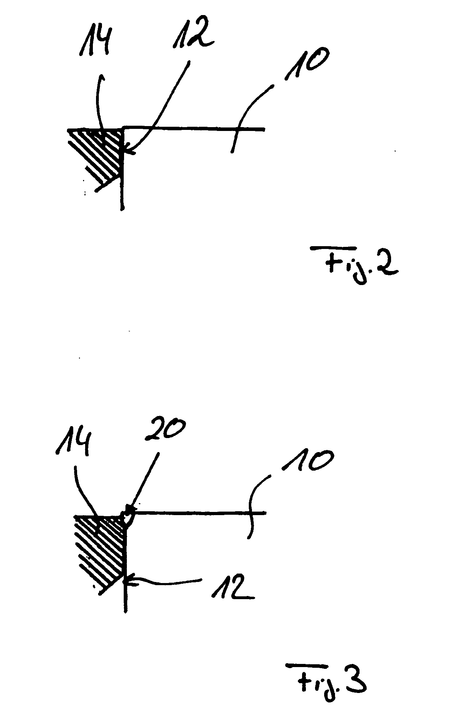

Wie Fig. 1 entnommen werden kann, sind die gegenüberliegenden Enden beider Kühlbacken 14 und 15 jeweils an einer Traverse 18 über Schrauben 19 verschiebbar befestigt, um den Abstand der beiden Kühlbacken 14 und 15 an die Abmessung des Schaufelstumpfs 10 anzupassen. Wie Fig. 1 zeigt, wird der Schaufelstumpf 10 mit seiner Strömungseintrittskante 12 sowie seiner Strömungsaustrittskante 13 in einen mittleren Bereich zwischen den beiden Kühlbacken 14 und 15 eingespannt. Fig. 2 zeigt einen Querschnitt durch das Detail II der Fig. 1 im Bereich der Kühlbacke 14 sowie der Strömungseintrittskante 12 des Schaufelstumpfes 10.

Im Anschluss an das Einspannen des Schaufelstumpfes 10 in der Kühleinrichtung 11 wird sowohl im Bereich der Strömungseintrittskante 12 als auch im Bereich der Strömungsaustrittskante 13 jeweils eine punktförmige Schweißperle 20 durch Laserpulverauftragsschweißen aufgetragen. Wie Fig. 3 entnommen werden kann, steht die Schweißperle 20 gegenüber der Strömungseintrittskante 12 sowie gegenüber der in Fig. 3 nicht-dargestellten Strömungsaustrittskante 13 vor, sodass in diesem Bereich ein Übermaß bzw. Aufmaß vorgehalten wird. Der Bereich zwischen der Strömungseintrittskante 12 und der Kühlbacke 14 sowie zwischen der Strömungsaustrittskante 13 und der Kühlbacke 15 wird sozusagen durch die jeweilige Schweißperle 20 überbrückt, wobei sich aufgrund der unterschiedlichen Werkstoffzusammensetzungen die Schweißperle 20 lediglich mit dem Schaufelstumpf 10 verbindet.

Im Anschluss an das Auftragen der Schweißperlen 20 wird dann durch Laserpulverauftragsschweißen zwischen den Schweißperlen Material aufgetragen, um den entfernten Schaufelabschnitt der zu reparierenden Gasturbinenschaufel zu erneuern. Das Laserpulverauftragsschweißen zum Erneuern des entfernten Schaufelabschnitts zwischen den zuvor aufgetragenen Schweißperlen 20 kann dabei zum Beispiel wie in der US 6,172,327 B2 gezeigt, erfolgen. Da die Details des Laserpulverauftragsschweißens dem hier angesprochenen Fachmann geläufig sind, bedürfen diese hier keiner näheren Erläuterung.

Während des Auftragens der Schweißperlen 20 sowie während des nachfolgenden Auftragens weiteren Materials zwischen den Schweißperlen 20 zur Erneuerung des entfernten Schaufelabschnitts erfolgt eine aktive Kühlung der Kühleinrichtung 11 und damit der Strömungseintrittskante 12 und der Strömungsaustrittskante 13 des Schaufelstumpfes, in dem die Kühlbacken 14 und 15 der Kühleinrichtung 11 von Kühlmedium durchströmt werden. Hierdurch werden Beschädigungen der Schaufel im Bereich der empfindlichen Strömungseintrittskante sowie Strömungsaustrittskante vermieden.

Im Anschluss an das Erneuern des entfernten Schaufelabschnitts durch Laserpulverauftragsschweißen liegt im Bereich der Strömungseintrittskante sowie der Strömungsaustrittskante ein Aufmaß vor. Dieses kann dann durch einen Abtragprozess, zum Beispiel durch eine zerspanende oder elektrochemische Nachbearbeitung, entfernt werden, um im Bereich der Strömungseintrittskante sowie Strömungsaustrittskante strömungstechnische Endkonturen bereitzustellen.

Das hier vorliegende, erfindungsgemäße Verfahren löst das Auftragen bzw. Anbinden der ersten Pulverlage auf den Schaufelstumpf dadurch, dass einerseits vor dem eigentlichen Laserpulverauftragsschweißen zuerst Schweißperlen im Bereich der Strömungseintrittskante sowie der Strömungsaustrittskante durch Laserpulverauftragsschweißen aufgetragen werden, wobei hierbei sowie beim eigentlichen Laserpulverauftragsschweißen eine Kühlung durchgeführt wird. Mit dem erfindungsgemäßen Verfahren wird eine perfekte Anbindung der kritischen, ersten Pulverlage erzielt, ohne die filigranen Strömungseintrittskanten und Strömungsaustrittskanten zu beschädigen.

## Patentansprüche

1. Verfahren zur Reparatur von Turbomaschinenschaufeln, insbesondere von Gasturbinenschaufeln an integral beschaufelten Gasturbinenrotoren, mit folgenden Schritten:
a) Bereitstellen einer zu reparierenden Turbomaschinenschaufel oder eines zu reparierenden, integral beschaufelten Rotors mit einem beschädigten Schaufelabschnitt;
b) Entfernen des beschädigten Schaufelabschnitts von der Turbomaschinenschaufel oder dem integral beschaufelten Rotor unter Bildung eines Schaufelstumpfes (10),
**gekennzeichnet durch** die weiteren Schritte:
c) Einspannen des Schaufelstumpfes (10) zumindest im Bereich einer Strömungseintrittskante (12) und einer Strömungsaustrittskante (13) desselben in einer Kühleinrichtung (11), die beim eigentlichen Laserpulverauftragschweißen eine Kühlung durchführt;
d) Auftragen jeweils einer punktförmigen Schweißperle (20) im Bereich der Strömungseintrittskante (12) und der Strömungsaustrittskante (13) des Schaufelstumpfes (10) **durch** Laserpulverauftragschweißen, wobei die Schweißperlen (20) zumindest über die Strömungseintrittskante (12) und die Strömungsaustrittskante (13) vorstehen,
e) Auftragen von Material **durch** Laserpulverauftragschweißen zwischen den Schweißperlen (20) im Bereich des oder jedes entfernten Schaufelabschnitts zur Erneuerung des entsprechenden Schaufelabschnitts.

2. Verfahren nach Anspruch 1,
**dadurch gekennzeichnet,**
**dass** der Schaufelstumpf (10) derart in der Kühleinrichtung (11) angeordnet wird, dass die Kühleinrichtung (11) den Schaufelstumpf (10) umschließt.

3. Verfahren nach Anspruch 1 oder 2,
**dadurch gekennzeichnet,**
**dass** die Kühleinrichtung (11) während des Laserpulverauftragschweissens aktiv gekühlt wird.

4. Verfahren nach einem der Ansprüche 1 bis 3,
**dadurch gekennzeichnet,**
**dass** hierzu die Kühleinrichtung (11) von einem Kühlmedium durchströmt wird.

5. Verfahren nach Anspruch 4,
**dadurch gekennzeichnet,**
**dass** im Anschluss an Schritt e) Material zumindest im Bereich der Strömungseintrittskante (12) und der Strömungsaustrittskante (13) zur Bereitstellung strömungstechnischer Endkonturen abgetragen wird.

6. Verwendung des Verfahrens nach einem der Ansprüche 1 bis 5 zur Reparatur von Gasturbinenschaufeln.

7. Verwendung des Verfahrens nach einem der Ansprüche 1 bis 5 zur Reparatur von Gasturbinenschaufeln an integral beschaufelten Gasturbinenrotoren.

## Claims

1. Method for the repair of turbomachine blades, in particular gas turbine blades on integrally bladed gas turbine rotors, having the following steps:
a) provision of a turbomachine blade that is to be repaired or of an integrally bladed rotor that is to be repaired having a damaged blade section;
b) removal of the damaged blade section from the turbomachine blade or the integrally bladed rotor, forming a blade stump (10),
**characterised by** the further steps:
c) clamping of the blade stump (10) at least in the region of a flow-inlet edge (12) and a flow-outlet edge (13) of the same in a cooling device (11) that carries out cooling during actual laser powder build-up welding;
d) application in each case of a punctiform welding bead (20) in the region of the flow-inlet edge (12) and the flow-outlet edge (13) of the blade stump (10) by laser powder build-up welding, wherein the welding beads (20) protrude at least over the flow-inlet edge (12) and the flow-outlet edge (13),
e) application of material by laser powder build-up welding between the welding beads (20) in the region of the or each blade section that has been removed in order to renew the corresponding blade section.

2. Method according to claim 1,
**characterised in that** the blade stump (10) is arranged in such a way in the cooling device (11) that the cooling device (11) encloses the blade stump (10).

3. Method according to claim 1 or 2,
**characterised in that** the cooling device (11) is actively cooled during the laser powder build-up welding.

4. Method according to one of claims 1 to 3,
**characterised in that** for this a cooling medium flows through the cooling device (11).

5. Method according to claim 4,
**characterised in that** following step e) material is removed at least in the region of the flow-inlet edge (12) and the flow-outlet edge (13) in order to provide fluid-dynamic final contours.

6. Use of the method according to one of claims 1 to 5 for the repair of gas turbine blades.

7. Use of the method according to one of claims 1 to 5 for the repair of gas turbine blades on integrally bladed gas turbine rotors.

## Revendications

1. Procédé de réparation d'aubes de turbomachines, en particulier d'aubes de turbines à gaz sur des rotors de turbines à gaz à aubage intégré, comportant les étapes suivantes :
a) préparation d'une aube de turbomachine à réparer ou d'un rotor à aubage intégré à réparer présentant une section d'aube endommagée ;
b) retrait de la section d'aube endommagée de l'aube de turbomachine ou du rotor à aubage intégré de manière à former une aube tronquée (10) ;
**caractérisé par** les autres étapes suivantes :
c) mise en place de l'aube tronquée (10), au moins au niveau d'un bord d'attaque (12) et d'un bord de fuite (13) dans un dispositif de refroidissement (11) effectuant un refroidissement lors du soudage au laser avec apport de poudre proprement dit ;
d) application, par soudage au laser avec apport de poudre, d'une perle de soudure (20) ponctuelle au niveau du bord d'attaque (12) et du bord de fuite (13) de l'aube tronquée (10), les perles de soudure (20) faisant saillie au moins sur le bord d'attaque (12) et le bord de fuite (13),
e) application de matière par soudage au laser avec apport de poudre, entre les perles de soudure (20) au niveau de la section d'aube, ou de chaque section d'aube retirée, pour la rénovation de la section d'aube correspondante.

2. Procédé selon la revendication 1,
**caractérisé**
**en ce que** l'aube tronquée (10) est mise en place dans le dispositif de refroidissement (11) de telle manière que le dispositif de refroidissement (11) entoure l'aube tronquée (10).

3. Procédé selon la revendication 1 ou la revendication 2,
**caractérisé**
**en ce que** le dispositif de refroidissement (11) est refroidi activement pendant le soudage au laser avec apport de poudre.

4. Procédé selon l'une des revendications 1 à 3,
**caractérisé**
**en ce que** le dispositif de refroidissement (11) est traversé par un fluide réfrigérant à cet effet.

5. Procédé selon la revendication 4,
**caractérisé**
**en ce que** suite à l'étape e), de la matière est retirée au moins au niveau du bord d'attaque (12) et du bord de fuite (13) pour la préparation de contours finaux techniquement performants pour la circulation fluidique.

6. Utilisation du procédé selon l'une ou plusieurs des revendications 1 à 5 pour la réparation d'aubes de turbines à gaz.

7. Utilisation du procédé selon l'une ou plusieurs des revendications 1 à 5 pour la réparation d'aubes de turbines à gaz sur des rotors de turbines à gaz à aubage intégré.
